# EUROPEAN PATENT APPLICATION

(11) **EP 4 335 705 A1**
(43) Date of publication of application: **13.03.2024**
(21) Application number: 22194376.4
(22) Date of filing: 07.09.2022
(51) Int. Cl.: B60S 1/56, B08B 7/00, G02B 27/00, H05B 3/84, B60S 1/54

(54) **CO2 SENSOR-CLEANING ARRANGEMENT, METHOD FOR CONTROLLING OPERATION THEREOF, COMMERCIAL VEHICLE AND COMPUTER PROGRAM**

(71) Applicant: ZF CV Systems Global GmbH, 3006 Bern (CH)
(72) Inventor: BERTOLINA, Guillermo, 1150 Brussels (BE); KLINGER, Tobias, 31832 Springe (DE); MAGALHAES PEREIRA, Rodrigo, 86165 Augsburg (DE)
(74) Representative: Ohlendorf, Henrike

(57) **Abstract**

The invention is directed to a CO₂ sensor-cleaning arrangement (100) for cleaning a sensor (101, 103, 105), wherein the arrangement is adapted and the sensor (101, 103, 105) are adapted for being implemented in a vehicle (1000), in particular for supporting a sensing function for an advanced driver assistance system (1500) of the vehicle (1000), and wherein the CO₂ the sensor -cleaning arrangement (100) comprises:
- a CO₂-reservoir (104) comprising pressurized CO₂, in particular as a pressurized CO₂-gas,
- a connection tube (106) connecting the CO₂-reservoir (104) to a nozzle (108); and a control valve (114) arranged in the connection tube (106) and configured to control a flow (F) of the CO₂-fluid from the CO₂-reservoir (104) to the nozzle (108) in the connection tube (106);
- wherein the outlet (108) is arranged and configured to provide a CO₂-medium (110) to a surface (112) to be cleaned of the sensor. According to the invention it is provided that
- the outlet (108) has an orifice (116) configured to generate the CO₂-medium (110) at least partly in the form of CO₂ dry-ice particles (110) from the CO₂-fluid and
- the sensor cleaning arrangement (100) further comprises a heating element (118) arranged and configured to controllably heat the surface (112) of the sensor (101).

## Description

The present invention is directed to a CO₂ sensor-cleaning arrangement of the preamble part of claim 1 for cleaning a sensor, wherein the arrangement is adapted for being implemented in a vehicle and the sensor is adapted for being implemented in a vehicle, in particular for supporting a sensing function for an advanced driver assistance system.

In addition, the present invention is directed to a commercial vehicle comprising said CO₂ sensor-cleaning arrangement.

Further, the present invention is directed to a method for controlling operation of a CO₂ sensor-cleaning arrangement and to a computer program.

Semi and fully autonomous vehicles rely on its set of sensors to generate a comprehensive picture about the vehicle surrounds, enabling computer systems to understand what and in which condition things are perceived. Without this set of information semi or autonomous vehicles either have a reduced performance or are not able to operate. Both scenarios are extremely critical to the semi or fully autonomous vehicle putting those either in danger of accident by being blinded due whatever contamination that could block the sensor visualization or putting the vehicle completely inoperant. Especially in the case of fully autonomous vehicles, those vehicles are aimed to operate without driver, meaning that in case of one or multiple sensor contamination, in the best scenario, the vehicle would remain stopped at the place of the contamination up to the time that some technician reaches the vehicle to clean the sensor and make it again capable of operate or in the worst scenario the contamination could cause an accident.

US 10,173,646 B1 discloses a system as mentioned in the introduction and a method for cleaning one or more sensors on an autonomous vehicle according to a sensor cleaning system.

The method includes determining a sensor cleaning sequence for one or more sensor cleaning units of the autonomous vehicle based at least in part on the data indicative of the sensor condition. The one or more sensor cleaning units can be configured to respectively clean one or more sensors of the autonomous vehicle, using a fluid, gas or a sensor wiper device.

Since the sensor, especially in a ADAS, must be active during all time of the vehicle operation, an economical consumption of the available cleaning resources is of high importance. Typically, sensors are cleaned with the use of a fluid (e.g. water, solvent, etc.) or compressed gas (air, nitrogen), or mechanically (wipers), in different combinations. Nevertheless, there are situations where such an approach has still difficulties to handle contaminants such as hydrocarbon based and organic residues.

Carbon dioxide (CO₂) is largely used in the industry for applications like surface cleaning and surface preparation of electronics and semiconductors. Especially on the optics industry, CO₂ is used to remove particles, oil, finger prints and other kind of contamination. The publication "Carbon Dioxide Snow Cleaning Applications" by R. Sherman in Developments in Surface Contamination and Cleaning, Vol 11 (2019) provides a review on the current state of snow cleaning applications. Document US 7,293,570 B2 describes an exemplary carbon dioxide snow apparatus for a carbon dioxide snow generation system.

However, operation conditions in a laboratory or manufacturing facility are different from those present in an autonomous vehicle while driving, where the sensors are constantly exposed to the environment and subject to many different sources of contamination including dust, mud, oil, water (in the form of rain or snow), biological matter such as insects, etc.. Besides the functionality of the sensor has to be maintained during the cleaning process to ensure operation of the semi or fully autonomous vehicle.

It is therefore an object of the present invention to enable the use of CO₂ cleaning techniques for sensors in vehicles, in particular for sensors of an automated driver assistance system.

According to a first aspect of the present invention the object is achieved with a CO₂ sensor-cleaning arrangement of claim 1 for cleaning a sensor.

The arrangement is advantageously adapted for being implemented in a vehicle and the sensor is adapted for being implemented in a vehicle, in particular for supporting a sensing function for an advanced driver assistance system (ADAS) or for partially or fully autonomous driving (AD).

The CO₂ sensor-cleaning arrangement starts from a CO₂ sensor-cleaning arrangement as mentioned in the introduction and comprises:
- a CO₂-reservoir comprising pressurized CO₂-fluid, in particular as a pressurized CO₂-gas,
- a connection tube connecting the CO₂-reservoir to an outlet; and a control valve arranged in the connection tube and configured to control a flow of the CO₂ from the CO₂-reservoir to the outlet;
- wherein the outlet is arranged and configured to provide a CO₂-medium to a surface to be cleaned of the sensor.

According to the invention it is provided that
- the outlet has an orifice configured to generate the CO₂-medium at least partly in the form of CO₂ dry-ice particles from the CO₂-fluid and
- the sensor cleaning arrangement further comprises a heating element arranged and configured to controllably heat the surface of the sensor.
The provision of a heating element for heating, in a controlled manner, the surface of the sensor, has a positive impact in the efficiency of the CO₂-based cleaning process. The temperature gradient between the contaminants on the surface, subject to the action of the CO₂ dry-ice particles and the surface of the sensor causes strains that favor the removal of the contaminants. The contamination particles tend to shrink under the action of the CO₂ dry-ice particles, while the surface tends to expand under the action of the heating element. Thus, the contact forces between contaminant and CO₂ dry-ice particles are reduced and the flow of the CO₂-medium carries away the contaminants that otherwise may remain stuck to the surface.

In a particular advantageous development the surface is heated such that liquefaction of the CO₂ dry-ice particles provided by the outlet is supported and condensate, in particular air condensate is prevented from forming or remaining on the surface of the sensor. In fact, the increased temperature of the surface, caused by the action of the heating element, drives an increased liquefaction of the impinging CO₂ dry-ice particles which increases the solvent property of the CO₂ that occurs when CO₂ is liquefied.

There are two different phenomena that contribute to the liquefaction of the dry-ice particles. First, an increase of pressure of the CO₂ dry-ice particles upon contact with the surface causes the CO₂ dry-ice particles to liquefy. The liquid CO₂ acts as a solvent, especially on organic contaminants, which are chemically interact with the CO₂. After hitting the surface the liquefied CO₂ is driven away from the surface as a result of a rebound movement. This causes a decrease in the pressure and drives a re-solidification of the CO₂ and the organic molecules that have interacted with it, which are then removed from the surface. The second phenomenon that contributes to the liquefaction of the dry ice particles is the increased temperature due to the heating element.

Carbon dioxide (CO₂) based snow cleaning is a surface cleaning process in which a stream of small dry ice particles impact and clean a surface via a physical (momentum transfer) and solvent interactions. These interactions are able to remove particles of different sizes ranging from visible particles to nanometer-scale particles, and also to remove organic residues as well as reagent grade solvents. The combination of particle removal over a wide range of sizes and organic removal makes the CO₂ snow cleaning technique unique in its potential to be used as a stand-alone cleaning technique for sensors in ADAS. Furthermore, CO₂ snow cleaning satisfies the increasingly stringent industrial, research and environmental demands. CO₂ snow cleaning is fast, gentle and environmentally safe.

Snow is formed by passing CO₂ through an orifice of the outlet and allowing it to expand to atmospheric pressure and it is based on pressure and subsequent temperature drops within the outlet and the expansion zone. In addition a secondary source of gas mixed with the CO₂ as, for example, compressed air, may be included, which can increase further the generation of CO₂ snow.

The inventive concept starts from the insight, that CO₂ snow cleaning is advantageous. In CO₂ snow cleaning, compressed CO₂-fluid (i.e., either liquid or gaseous) is expelled from the opening of the nozzle as a mixture of solid particles and gas, which impact the surface of the sensor to be cleaned. CO₂ snow typically refers to not fully dense solid dry ice. This means that CO₂ snow typically lacks the impact energy compared to similar sized CO₂ pellets used in dry ice blasting. Snow cleaning works by a combination of momentum transfer (mechanically dislodging contaminant particles), aerodynamic drag force by CO₂ expansion by sublimation forming a jet effect solvent action by liquefaction of the dry ice particles due pressure and temperature and also temperature strain, caused by abrupt temperature difference between the sensor surface heated by heating element and the surface contamination abruptly cooled by the CO₂ snow.

The first mechanism is based on a mechanical action using momentum transfer and aerodynamic drag force in which high velocity gas stream exerts drag force on the particles while the dry ice (snow) particles strikes the to be cleaned particles helping it to potentially overcomes the adhesive forces liberating surface from such particulate which are then swiped off by the high speed gas.

In the second mechanism, hydrocarbons and organic particles are removed via a transient solvent or a freeze fracture mechanism. The high pressure caused by the collision of the dry ice (snow) particulate and the to be cleaned surface, such pressure makes the snow to partially liquify in the region of contact when it then acts as solvent and as soon as the particulate starts its rebound movement and the pressure decreases the particulate solidifies once more carrying the contamination with it while high velocity gas stream moves it away.

The CO₂ stream, sublimated on contact with the surface, increases in volume several hundred times, thereby generating pressure to sweep the particles away. Liquid CO₂ also dissolves hydrocarbon-based contaminants, and its low temperature embrittles residues such as fingerprints, making them easier to blow away.

However, CO₂ snow temperature at ambient pressure is low at around -60°C. Depending on the conditions, the surface of the sensor may fall below the dew point, resulting in moisture condensation in the surface to be cleaned, thus creating undesirable effects that may interfere in the sensor functionality by obstruction promoted by the condensation, as well as an adequate environment to absorb more contamination from the surroundings.

Therefore, the CO₂ sensor-cleaning arrangement of the first aspect of the invention comprises a heating element, or a heater, Heating of the surface to be cleaned of the sensor contributes not only to avoid condensation, but also to the solvent effect of the snow as the liquification effect tends to increase with higher temperatures of the surface consequently increasing the solvent property of the CO₂ and thus the cleaning efficiency. It also ensures that the operation of the sensor can be continued or is only interrupted during a short amount of time that does not significantly interfere with the ADAS.

Further advantageous developments of the invention are found in the dependent claims and indicate in detail advantageous possibilities to realize the concept described above within the scope of the task as well as with regard to further advantages.

In the following, developments of the CO₂ sensor-cleaning arrangement of the first aspect of the invention will be described.

In a particular development, the outlet is provided in the form of a nozzle.

A development of a CO₂ sensor-cleaning arrangement according to the first aspect comprises of a CO₂ source with CO₂-fluid, i.e. liquid and/or gas, stored in a suitable reservoir, such as a CO₂ cylinder, a nozzle with an internal orifice, an on/off valve, and the means to transport the CO₂-fluidfrom the source to the nozzle, namely a tube, or any other kind of suitable tubing element such as a hose. In a particular development the arrangement comprises a cylinder fitting, tubing, an on/off gun or valve and a nozzle. The units are preferably made with a PTFE lined flexible stainless-steel hosing. Available on/off controls include solenoid, pneumatic, or manual valves, or handguns.

The CO₂ reservoir is typically a carbon dioxide cylinder that contains a liquefied gas under pressure. Carbon dioxide can exist as a liquid below the critical temperature of 31 °C (304.15 K) and above the triple point with a temperature of - 56.6 °C (216.55 K) and 4.18 bar gauge. CO₂ is typically transported, stored and handled in liquid form, either at ambient temperature (in cylinders or non-insulated tanks at a pressure of 45-65 bar) or refrigerated (in insulated tankers and storage tanks) at temperatures between -35°C and -15°C and pressures of 12 to 25 bar.

The expansion of liquid CO₂ to atmospheric pressure is used to produce the CO₂ snow containing the CO₂ dry ice particles, at a temperature of approximately -78°C.

Typically, the reservoir contains over 90%, preferably over 99% more preferably over 99,9% of CO₂. Traces of other elements or molecules can also be present, including water, oxygen, carbon monoxide, hydrogen, argon, nitrogen, ammonia, nitric oxide, nitrogen dioxide, volatile hydrocarbons (as methane), etc.

In a development, the CO₂ sensor-cleaning arrangement includes the sensor having the surface to be cleaned. In an alternative development, the CO₂ sensor-cleaning arrangement comprises a support structure for receiving a sensor, wherein the outlet or the nozzle is fixedly or movably connected to the support structure.

The main development consists of a cylinder fitting as a CO₂ reservoir, a hose as a connection tube, an on/off valve as a control valve, a nozzle, and a heating element for heating the surface to be cleaned. The nozzle is, in a particular development, integrated in the sensor housing or in the sensor itself. In an alternative development, the nozzle is separated set to be fixed near the surface of the sensor in order to enable CO₂ snow to be sprayed at the surface of the sensor.

In a development, the heating element or heater is a heating structure brought in contact with the surface of the sensor to be cleaned. Additionally, or alternatively, the heating element or heater is a radiating element, for instance radiating in the infrared spectrum in the direction of the surface to be cleaned. The heating element may further include a temperature sensor for regulating the heat provided to the surface in order to maintain the temperature within a predetermined temperature range.

In a particular preferred development, the sensor housing holds the heater element and/or the heater element is integrated in a sensor housing wall, in particular in the carrier-wall, or the heater element is integrated in the sensor itself. Preferably, the sensor housing surface is composed of an omniphobic material/coating that repels dust and any type of contamination.

In a preferred development, the CO₂ sensor-cleaning arrangement further comprises an electronic control unit arranged and configured to control operation of the control valve and/or to control operation of the heating element. In particular, the electronic control unit is connected to the control valve and/or to the heating element by a wired (e.g. a CAN bus) or a wireless connection for providing operation control signals. Alternatively, the operation of the control valve and/or of the heating element can be directly controlled by a driver of the vehicle.

In another development the heating element is configured to set a temperature of the surface of the sensor at a temperature value between 40°C and 60°C. Preferably, the temperature of the heating element is controlled by an electronic control unit.

Another effect that is to be taken into account, is that gas flowing to the surface can result in an imbalance of electrical charges, causing static change with the surface predominately negative ionized, which brings the side effect of attracting further contamination from the ambient. In order to overcome this issue, in a development the surface of the sensor is electrically grounded.

Alternatively, or additionally, another embodiment comprises a ionizer arranged and configured to ionize the CO₂ molecules. Preferably, the operation of the ionizer is controlled by an electronic control unit, which is configured to provide operation instructions to the ionizer via a wired or wireless connection.

In a development the ionizer is an electrostatic discharge (ESD) ionizer that is configured to neutralize static charge on a surface.

This developments make use of a controlled ionization of the air and CO₂ in order to reduce attraction and retention of air suspended particles by static charge which is caused by the drag of the air when vehicle is in movement and or rapid flow of compressed air or CO₂ when applied towards the surface.

The control valve is preferably an electrically controllable manifold valve, in particular a solenoid valve, preferably a 2/2-way solenoid valve. The control valve is connected either to the sensor or to the electronic control unit, e.g., a sensor cleaning controller, and the operation is triggered by said electronic control unit or by said sensor, following a defined cleaning strategy. The solenoid valve can be a hydraulic or a pneumatic solenoid according to the choice of CO₂ supply.

The heating system is connected either to the sensor or to the electronic control unit, e.g., a sensor cleaning controller, and the operation is triggered by said control unit or by said sensor, following the defined heating strategy.

The ionizing system is connected either to the sensor or to the electronic control unit, e.g., a sensor cleaning controller, and the operation is triggered by said control unit or by said sensor, following the defined ionization strategy

In a preferred development, the CO₂ sensor-cleaning arrangement further comprises a blockage detection unit, arranged and configured to monitor a state of the surface of the sensor and, upon detection of a blockage on the surface of the sensor, to provide a blockage detected signal. In a development the blockage detection unit is integrated into or connected to the electronic control unit. Preferably, an analysis of the sensor data provided by the sensor can be used to determine whether a cleaning of the sensor is necessary. Alternatively, information or data provided by other sensors or systems (such as weather data) can be used for determining whether a cleaning process should be activated.

In particular, an electronic control unit is further configured to receive the blockage detected signal and to control operation of the control valve in dependence thereof. Additionally, the operation of the heating element and/or the ionizer can be controlled also in dependence on the blockage detected signal.

In further developments according to the invention, the CO₂ snow cleaning is not a stand-alone technique but it is combined with other cleaning strategies.

For example, in a development, the CO₂ sensor-cleaning arrangement further comprises a comprised air reservoir, a second connection tube connecting the compressed air reservoir to a second nozzle that is arranged and configured to provide a jet of compressed air to the surface of the sensor and a second control valve arranged and configured to control a flow of compressed air from the compressed air reservoir to the second nozzle. Preferably, an electronic control unit is further configured to control operation of the second control valve.

Additionally, or alternatively, in another development, the CO₂ sensor-cleaning arrangement further comprises an ultrasonic cleaning unit having a liquid reservoir connected to the surface of the sensor and an ultrasound generator configured to generate an ultrasound frequency for cleaning the surface of the sensor. Preferably, an electronic control unit is further configured to control operation of the ultrasonic cleaning unit.

In particular, the sensor whose surface is to be cleaned by the CO₂ sensor-cleaning arrangement is an optical sensor, or a Lidar sensor or a radar sensor. In a development, the arrangement comprises a plurality of sensors and each of them is associated to a respective nozzle connected to a CO₂ reservoir via a respective connection tube. A respective control valve can be provided for controlling flow to each nozzle. In a development, the arrangement comprises a plurality of CO₂ reservoirs.

In a development, the CO₂ sensor-cleaning arrangement comprises a Venturi nozzle operated using compressed air and liquid CO₂.

Different from the state of the art, the CO₂ sensor-cleaning arrangement of the first aspect of the invention can be used as either standalone solution or in combination with other state of art systems, targeting higher efficiency on the cleaning of the surface specially against organic contamination which is normally corner case for state of art systems, but also optimize the way in which it is cleaned, so that resources can be saved and the uptime of the sensors is increased.

The CO₂ sensor-cleaning arrangement of the first aspect of the invention thus provides an effective solution to a corner case of traditional cleaning systems for sensors in vehicles (air-based, fluid-based and mechanical) by having the capacity to eliminate hydrocarbon-based and organic contamination, such as for example organic rests of insects that have impacted on the surface of the sensor and that cannot be removed by traditional methods such as wipers (with or without fluid). It also enables an increase of the vehicle's upper time by reducing the possibility of the vehicle becoming in operant due to sensor blocking. It reduces the consumption of liquid resources in the vehicle, decreasing the demand for maintenance e.g., system refilling. Besides it is an environmental friendly system with superior cleaning technology that offers a competitive advantage and the potential replacement of fluid-based cleaning systems.

According to a second aspect of the invention, a commercial vehicle is disclosed. The commercial vehicle comprises one or more sensors, e.g. an optical sensor, such as a camera, or a lidar sensor or a radar sensor and also comprises a CO₂ sensor-cleaning arrangement according to the first aspect of the invention for cleaning said one or more sensors.

The commercial vehicle of the second aspect thus shares the advantages of the CO₂ sensor-cleaning arrangement of the first aspect of the invention and of any of its developments.

Preferably, the operation of the CO₂ sensor-cleaning arrangement, and also preferably of the sensors in the commercial vehicle, is controlled by an electronic control unit.

More preferably, in the commercial vehicle, the CO₂ sensor-cleaning arrangement is configured to support a sensing function for an advanced driver assistance system.

A third aspect of the invention is formed by a method for controlling operation of a CO2 sensor-cleaning arrangement for cleaning a sensor, wherein the arrangement is adapted and the sensor is adapted for being implemented in a vehicle, in particular for supporting a sensing function for an advanced driver assistance system of the vehicle, the method comprising:
- controlling a flow of compressed CO₂ from a CO₂-reservoir to an outlet in a connection tube;
- providing a CO₂-medium to a surface to be cleaned of the sensor, wherein the CO₂ medium is provided at least partly in the form of CO₂ dry-ice particles from the CO₂-fluid; and
- controllably heating the surface of the sensor.

The method of the third aspect thus shares the advantages of the CO₂ sensor-cleaning arrangement of the first aspect of the invention.

A fourth aspect of the present invention is formed by a computer program comprising instructions, which, when executed by a processor or an electronic control unit or controller of a CO₂ sensor cleaning arrangement, cause the CO₂ sensor cleaning arrangement to carry out the method of the third aspect of the invention.

It shall be understood that a preferred embodiment of the present invention can also be any combination of the dependent claims or above embodiments with the respective independent claim. These and other aspects of the invention will be apparent from and elucidated with reference to the embodiments described hereinafter.

The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regards to additions to the lessons immediately recognizable from the drawings, reference is made to the relevant state of the art.

It should be borne in mind that numerous modifications and changes can be made to the form and detail of an embodiment without deviating from the general idea of the invention. The features of the invention disclosed in the description, in the drawings and in the claims may be essential for the further development of the invention, either individually or in any combination.

In addition, all combinations of at least two of the features disclosed in the description, drawings and/or claims fall within the scope of the invention. The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable.

The following drawing show in:
- Fig. 1: a schematic block diagram of a CO₂ sensor-cleaning arrangement in accordance with a first embodiment of the invention;
- Fig. 2A: a schematic diagram of a cross section of an exemplary outlet for providing the CO₂ medium;
- Fig. 2B: a schematic diagram of the working principle of CO₂ snow cleaning applied to sensor cleaning in vehicles;
- Fig. 2C: a schematic diagram of showing the effects that impact on a surface has on a CO₂ dry ice particle;
- Fig. 3: a schematic block diagram of a vehicle comprising a CO₂ sensor-cleaning arrangement in accordance with a second embodiment of the invention;
- Fig. 4: a schematic block diagram of a CO₂ sensor-cleaning arrangement in accordance with a third embodiment of the invention;
- Fig. 5: a schematic diagram of a sensor and a sensor housing with an integrated heating element;
- Fig. 6: a schematic block diagram of a CO₂ sensor-cleaning arrangement in accordance with a fourth embodiment of the invention; and
- Fig. 7: a flow diagram of a method for controlling operation of a CO₂ sensor-cleaning arrangement in accordance with the invention.

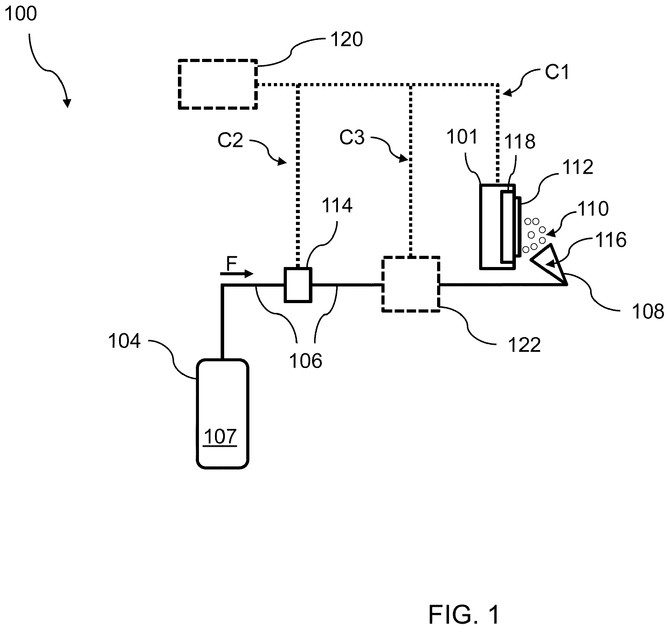

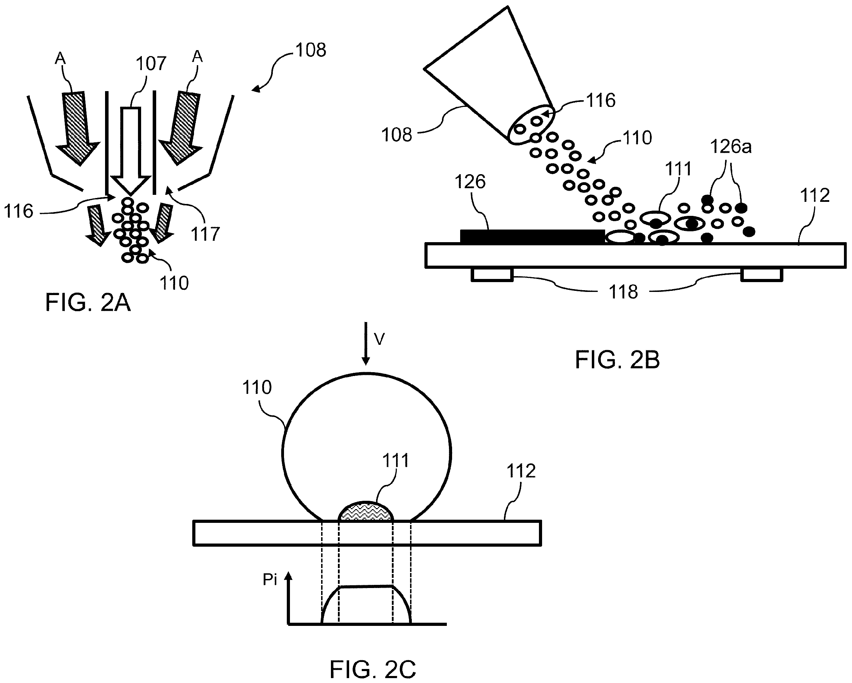

Fig. 1 shows a schematic block diagram of a CO₂ sensor-cleaning arrangement 100 in accordance with a first embodiment of the invention. The CO₂ sensor-cleaning arrangement 100 is suitable for cleaning a sensor 101 adapted for being implemented in a vehicle 1000 (see Fig. 2), in particular for supporting a sensing function for an advanced driver assistance system. The CO₂ sensor - cleaning arrangement 100 comprises a CO₂ reservoir 104 for storing pressurized CO₂, either in liquid or in gaseous form. A connection tube 106 is arranged for connecting the CO₂ reservoir 104 to an outlet, in particular a nozzle 108. Said nozzle is arranged and configured to provide CO₂ 110 to a surface 112 to be cleaned of the sensor, in particular in the form of CO₂ snow, i.e. a mixture of solid particles and gas where the particles are not fully dense solid dry ice such as CO₂ pellets, which are typically used in dry ice blasting processes. A control valve 114 is arranged between the CO₂ reservoir 104 and the nozzle 108 and is configured to control a flow F of CO₂ from the CO₂ reservoir 104 to the nozzle 108. In the CO₂ sensor-cleaning arrangement 100, the nozzle 108 has an orifice 116 that is configured to generate CO₂ dry ice particles 110 (CO₂ snow), from the CO₂. The CO₂ sensor cleaning arrangement 100 further comprises a heating element 118 arranged and configured to controllably heat the surface 112 of the sensor 101 for preventing condensation on the surface 112 of the sensor 101 and for liquefying the dry ice particles 110 provided by the nozzle 108.

Fig. 2A shows a schematic diagram of an exemplary outlet 108 for providing the CO₂-medium, in particular in the form of dry ice particles 110. The outlet 108 has an orifice or opening 116; configured to generate the CO₂-medium 110, at least partly in the form of CO₂ dry-ice particles 110 from the CO₂-fluid. The compressed liquid or gaseous carbon dioxide 105 is expelled from the nozzle 108 via the aperture 116, condensing into a mixture of solid particles 118 and gas, which will then impact the surface to be cleaned. The passage of either liquid or gaseous CO₂ 105 through the orifice 116 leads to formation of dry ice or snow particles 110.

The particular embodiment of an outlet shown in Fig. 2A also comprises a second aperture 117 that is connected to a compressed air system that provides compressed air A, indicated in Fig 1 by the arrows filled with diagonal lines. The compressed air may be used independently to remove some contamination such as dust or to act as a dynamic air shield thus preventing the deposition of contaminants. The compressed air A may also be provided together with the CO₂-medium 110 to further enhance the contamination removal effect. With a proper nozzle geometry the snow stream, i.e. the CO₂-medium, can obtain high velocities and effectively remove both particulate and organic contamination.

Since CO₂ snow temperature in ambient pressure is very low (at around -60° C), the surface temperature may fall below the dew point resulting in moisture condensation in the to be cleaned surface. This may lead to interferences in the sensor functionality by obstruction promoted by the condensation. It may also create an adequate environment to absorb more contamination from the environment. Heating of the surface to be cleaned by CO₂ snow by means of a heating element 118 contributes not only to avoid condensation but also to the solvent effect of the CO₂ snow as the liquefaction effect tend to increase with the higher temperature of the surface112, thereby increasing the solvent property of the CO₂ 110 and consequently the cleaning efficiency. The typical temperature for the heated surface 112 is be in between 40° and 60° C.

The CO₂ snow cleaning process removes particles of different sizes, from visible down to nanometers and also hydrocarbon-based contamination and organic residues can be removed. Carbon dioxide snow cleaning is nondestructive, nonabrasive, residue-free, and environmentally friendly - there is no chemical waste. The cleaning process is based upon the controlled expansion of either liquid or gaseous carbon dioxide. This expansion leads to the nucleation of small dry ice particles (CO₂ snow) 110 and a high velocity carrier gas stream. The removal of organic and particulate residues from surfaces during CO₂ snow cleaning can be explained by two different mechanisms, namely one for particulate removal and the other for organic contamination removal. The mechanism for particle removal involves a combination of aerodynamic forces i.e., forces related to a moving high-velocity gas, and momentum transfer between the dry ice and surface contamination. The mechanism for organic contamination removal usually requires the presence of liquid carbon dioxide during impact.

Generally, a high-velocity flowing gas removes larger particulates from a surface. The moving gas exerts an aerodynamic drag force on the surface particles and the magnitude of this force is proportional to the particle's area (diameter squared). If the drag force exceeds the surface adhesion force, particle removal occurs and the particle is carried away with the moving gas flow. The surface adhesion forces -van der Walls, capillary forces, dipole attraction -vary with the diameter of the particle. Aerodynamic drag forces can remove larger particles, but as the contaminant diameter decreases, the aerodynamic drag force decreases much faster than the surface adhesive forces. Therefore, as the diameter of the contaminant reduces, the surface adhesion forces tend to dominate and the flowing gas cannot overcome these adhesive forces. This cross over is typically in the micron and larger range.

With the addition of dry ice to the flowing gas stream, a new process is available for particle removal. In this process the particle on the surface is impacted by an impinging dry ice snow. The impact implies momentum transfer between the dry ice and surface contaminant and this momentum transfer can overcome the surface adhesive forces. Once liberated from the surface, the contaminants are easily carried away with the high-velocity gas stream. Particle removal efficiencies do not decrease for smaller particulate sizes as in the case for the aerodynamic drag force. Further, the ability to remove surface contamination by momentum transfer appears to be independent of surface contaminant size.

Fig. 2B shows a schematic diagram of the working principle of CO₂ snow cleaning applied to sensor cleaning in vehicles. The nozzle 108 provides CO2 dry ice particles which impact on a surface 112 that has contamination 126, such as organic contamination (e.g., after an insect has impacted on the surface 112). The surface 112 is actively heated by the heating element 118. The removal of such organic residues relies on two different mechanisms, one involves the presence of liquid carbon dioxide particles 111 at the surface 112 being cleaned. Liquid carbon dioxide 111 is an excellent solvent for hydrocarbons and other nonpolar substances. It should be noted that liquid carbon dioxide is thermodynamically unstable at atmospheric pressure and room temperature but is present in the snow cleaning process on the surface. An impacting snow particle 110 on a surface 112 at an impact velocity V, is shown schematically in Fig. 2C. During the short impact time, the pressure Pi increases at the dry-ice particle -surface interface (see pressure diagram in the lower part of Fig. 2C, and this pressure P can easily exceed the yield stress and triple point pressure of the dry ice particle (78 psi). Then, the dry ice particle can at least partly liquefy and act as a solvent while in contact with the surface. The liquefied part of the snow ice particle 110, labeled as 111 in Fig. 2C, corresponds to that part in which the pressure Pi is higher. Contamination can be dissolved by this liquid phase 111 and stay within the "liquid" part of the particle 110. When the particle starts to rebound off the surface, the interfacial pressures decrease and the dry ice particle re-solidifies, carrying the contamination away (see. Fig. 2B).

This surface liquid phase 112 may explain why carbon dioxide snow cleaning is a gentle cleaning process. The presence of a liquid phase limits the pressure Pi that can be imparted to the surface 112 during cleaning. When the snow particle 110 starts to liquefy 111 at the surface/dry ice interface, continued yielding and plastic flow only tend to increase the size of the contact area of the liquid phase 111.

Generally, organics, which are easily absorbed in liquid CO₂ are removed, organics with complex or other functional non-hydrocarbon based groups not readily soluble in liquid CO₂ are not easily removed. Instead, suggested a freeze-fracture removal process for these compounds has been suggested. The freeze -fracture process is responsible for the removal of silicones, fluorinated compounds and pump oils, and other insoluble organics. For instance, pump oils, Krytex, silicones layers have been removed, even ink on glass. Please note that freeze fracture is more effective with a liquid CO₂ source than a gas CO₂ source. Polymer layers are not soluble in liquid CO₂ and require a freeze fracture process.

Another topic is the removal of deposited films or coatings by carbon dioxide snow cleaning. Films that are deposited properly tend to remain on the substrate while those films that were deposited poorly onto dirty substrates may be removed. The reason for the inability to remove well-bonded films may be related to the combination of the nonabrasive action of CO₂ snow and the inability of the cleaning process to overcome any chemisorbed, covalent, metallic, or ionic bond. Thus, a different mechanism for surface cleaning with the large snowflake, low velocity streams has been proposed. Here, a thermophoretic process -forces caused by thermal gradients, can remove the particles off the surface. A fundamental aspect of this proposed process was that the snow flake does not contact the surface; instead, as the snowflake approaches the surface, the large thermal gradient causes sublimation on the bottom of the flake. This large release of gas separates the flake from the surface and also creates large shear forces on the surface particle population and can lead to liberation of the surface particles. Next, it has been postulated that thermophoretic forces attract the liberated particle to the cold side of the flake and are taken away for removal.

As it has been discussed CO₂ snow based cleaning is the most suitable CO₂-based cleaning strategy for cleaning sensors in a vehicle, in particular sensors that are part of the ADAS and require continuous operation and that are exposed to external contamination. Other types of CO₂ cleaning strategies include:
- CO₂ pellets or dry-ice blasting, where fully dense dry ice particles (not snow), which is the solid form of CO₂, are accelerated in a pressurized air stream and directed at the surface in order to clean it. However, the demand of use of dry ice pellets makes it not adequate for the sensor cleaning in vehicles.
- Supercritical carbon dioxide (SC CO₂), which is a precision cleaning technique where the gas-like viscosity and the liquid-like density of CO₂ are key characteristics that allow the process to be tuned to the application. However, the demand of use of a complex equipment renders this particular technique not adequate for sensor cleaning in vehicles.
- Liquid CO₂ washing, like supercritical fluid CO₂ washing, relies on the high solvent power of CO₂,but at lower temperatures and pressures making it simpler to implement. Because liquid CO₂ does not have the solvent power of the supercritical fluid, agitation and surfactants may be added to improve the effectiveness of the method. Liquid CO₂ has been used in dry cleaning and machined parts degreasing, but is however not adequate for sensor cleaning in vehicles.

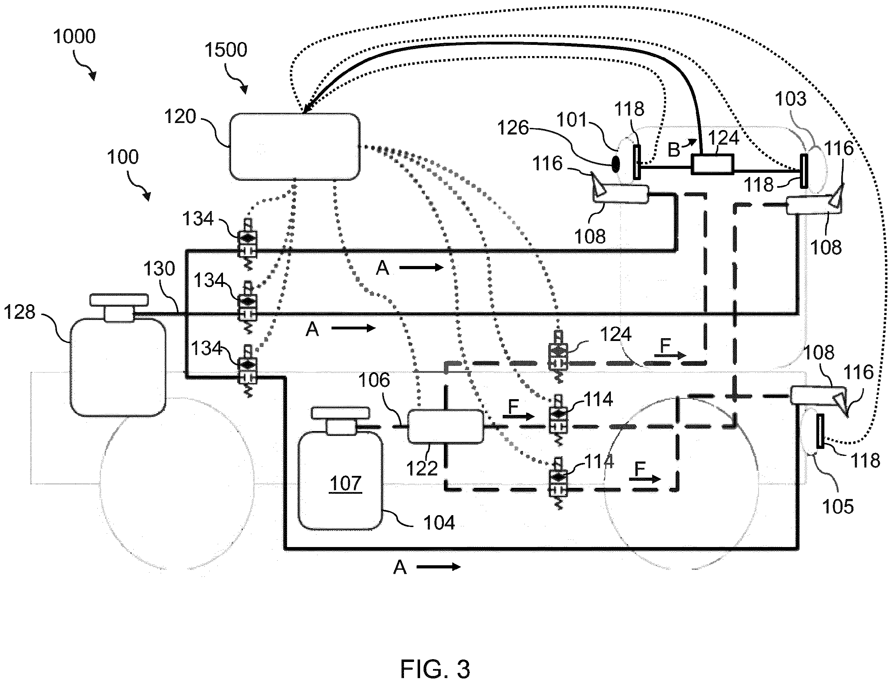

Thus, CO₂ Snow-based cleaning is an efficient method of cleaning that matches the cleaning needs of ADAS and AD sensors 101, 103, 105. The application of this particular technique can be stablished either as standalone CO₂ Snow Cleaning where this is the only cleaning mechanism of the given sensor of the vehicle or as complement to the traditional fluid-based or air-based or ultrasound based cleaning systems as it will be explained with regard to Fig. 2 and Fig. 3, targeting to a reduction of fluid consumption (critical specially for AD operations) and to an elimination of organic contamination, where known water-based or air-based systems have limited performance.

Optionally, the operation of the heating element 118 is controlled by an optional electronic control unit (ECU) 120, shown in dashed lines. The heating element 118 is preferably connected to the sensor 101 and/or to the ECU and its operation is triggered by those, following a predefined heating strategy. In particular, the ECU 120 is configured to provide control signal C1 for controlling the heating element 118.

The ECU may also optionally control the control valve 114. The control valve 114 is preferably connected to the sensor (not shown) and/or to the ECU 120 and its operation is triggered by those, following a predefined cleaning strategy. In particular, the ECU 120 is configured to provide control signal C2 for controlling the control valve 114. For semiautomatic operation, a unit including a 24VDC or solenoid valve can be selected in place of a manual on/off valve. This unit is referred to as K4-10S. The K4-10S includes s venturi nozzle on the unit, the 24 V Dc normally closed solenoid, 10 feet of a PTFE lined flexible stainless steel braided hose, a CO2 cylinder fitting, a 24 VDC power supply (CE approved with 120 to 250 VAC input), and a foot switch for manual control. Options include an inline filter and pressure gauges. It can be equipped with Li-ion batteries or the usual footswitch. The battery unit preferably comprises a switch on the handle and batteries.

Also optionally, the CO₂ sensor-cleaning arrangement 100 includes a ionizing unit or ionizer 122. Gas flowing along the surface 112 can result in an imbalance of electrical charges causing static charge with the surface 112, predominately negative ionized, which brings the side effect of attracting contamination from the ambient and this is a non-desirable effect which can be mitigated by either grounding the surface of by applying positive ionization balancing and equalizing protons and neutrons. This situation is valid for any form of gas flowing through the sensor surface as CO₂ from the proposed solution, as air compressed sprayed towards the surface and or even when the vehicle movement through the air as it accelerates forward. The ionizer 122 is this configured to remove static charges from the surface 112 of the sensor 101. The ionizing unit or ionizer 122 is preferably connected to the sensor (not shown) or to the ECU and its operation is triggered by those, following a predefined ionization strategy. In particular, the ECU 120 is configured to provide control signal C3 for controlling the ionizer 122.

Fig. 3 shows a schematic block diagram of a vehicle 1000 comprising a CO₂ sensor-cleaning arrangement 100 in accordance with a second embodiment of the invention. The arrangement 100 forms part of an advanced driver assistance system 1500. The discussion will focus on those features differentiating the arrangement 100 of Fig. 1 from the arrangement 100 of Fig. 3. Those technical features having similar or identical functions will be referred to using the same reference numbers. In Fig. 3, the commercial vehicle 1000 has a ADAS system 1500 controlled by an ECU 120 and comprising a plurality of sensors (three are shown in the Figure) 101, 103, 105 for determining the conditions of the environment for safe autonomous driving. Each of the sensors can be cleaned by a CO₂ sensor-cleaning arrangement that comprises a CO₂ source, namely a reservoir 104, a respective nozzle 108 with a respective internal orifice 116, the means to transport the CO₂ from the source to the nozzle, namely the tubing elements 106, and a respective control valve 114 as described above. In this particular example the control valve 114 is an electrically controllable solenoid valve connected to the ECU 120. Other suitable alternative control valves include manual valves, or handguns. The tubes are preferably made with a PTFE lined flexible stainless-steel hosing.

The ECU controls operation of the heater elements 118, the control valves 114, configured as 2/2-way solenoid valves and of the ionizer 122. Further, the CO₂ sensor-cleaning arrangement comprises a blockage detection unit 124 that is arranged and configured to monitor a state of the surface 112 of the sensors, in this particular example, of the sensors 101 and 103. Upon detection of a blockage 126, such as a contamination or a stain, on the surface 112 of the sensor, the blockage detection unit is configured to provide a blockage detected signal B to the ECU, which then can trigger the CO₂ cleaning process (e.g. controlling the control valves 114, the heating elements 118, and optionally also the ionizer 122 in dependence thereof.

In the CO₂ sensor-cleaning arrangement 100 of Fig. 3 the CO₂ snow cleaning is used in combination a with traditional cleaning method, namely air-based, in order to clean and keep automotive sensor 101, 103, 105 free of contamination. The CO₂ sensor-cleaning arrangement further comprising a compressed air supply 128 for supplying compressed air, a second connection tube 130 connecting the compressed air supply 128 to the nozzles 108 that is arranged and configured to provide a jet of compressed air 129 to the surface 112 of the sensors 101, 103, 105, and second control valves arranged and configured to control a flow of compressed air 128 from the compressed air supply 128 to the nozzle 108. The compressed air supply is preferably a compressed air reservoir, in particular a compressed air reservoir connected to a compressor, preferably controlled by the ECU.

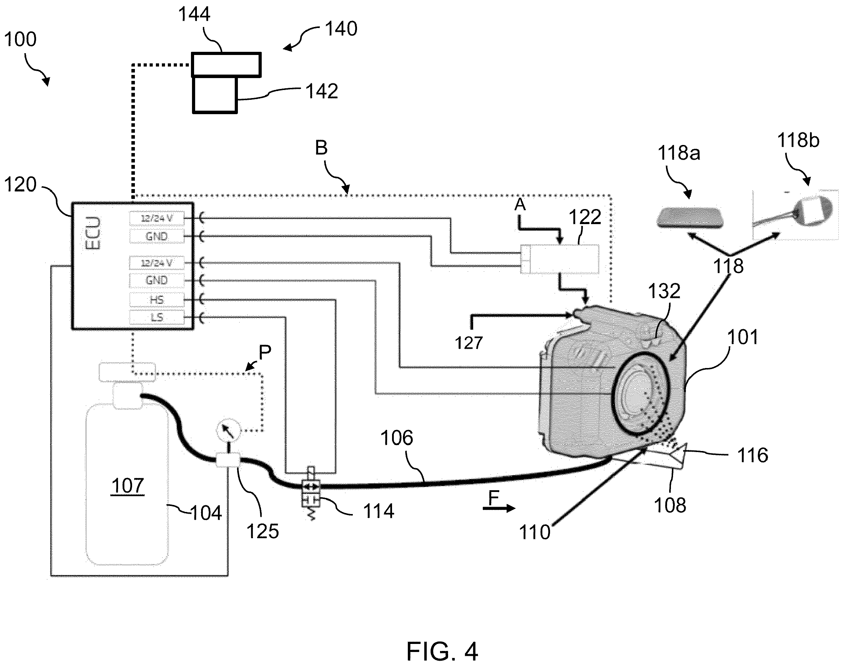

A single nozzle 108 or a combination of 2 or more nozzles 132 is designed to cover the surface 112 of interest that needs to be cleaned (see Fig. 4). For cameras normally a single nozzle 108 is required. For bigger sensors like Lidar and Radar a combination of nozzles might be required. Any other nozzle constellation including use of single nozzle receiving inputs from one or more sources of cleaning sources like CO₂ only or CO₂ / compressed air can also be considered, as exemplarily shown in Fig. 3.

Fig. 4 shows a schematic block diagram of a CO₂ sensor-cleaning arrangement 100 in accordance with a third embodiment of the invention. The discussion will focus on those features differentiating the arrangement 100 of Fig. 1 and Fig. 3 from the arrangement 100 of Fig. 4. Those technical features having similar or identical functions will be referred to using the same reference numbers. The ECU 120 controls the solenoid valve 114, and receives the pressure data P from a pressure sensor 125. The pressure data is used by the ECU 120 to monitor a pressure profile and to determine whether a refilling or replacement of the CO2 reservoir 104 is needed. The heating element or heater 118 can be an integral part of the sensor 101, in this example, a camera, such as a heating plate 118a or a heating ring 118b arranged around the surface to be cleaned or can be added to an existing sensor as a heating structure brought in contact with the surface 112 of the sensor 101 to be cleaned. Additionally, or alternatively, the heating element or heater 118 is a radiating element (not shown), for instance radiating in the infrared spectrum in the direction of the surface to be cleaned. The ECU 120 of Fig. 4 comprises input connections for receiving the pressure data P and the blockage detected signal B and output connections for controlling operation of the control valve 114, the heating element 118 and an ionizer 122. The ionizer is arranged in a line for compressed air 129 that connects the compressed air supply (not shown) with a second nozzle 132 different from nozzle 108. There is another line or tube for providing a liquid, such as water 127 for liquid based cleaning of the sensor. For example, the liquid can be used for a water or solvent based cleaning of the sensor, or as part of an ultrasonic cleaning unit 140, that comprises a liquid reservoir 142 connected to the surface 112 of the sensor 101 and an ultrasound generator 144 configured to generate an ultrasound frequency for cleaning the surface 112 of the sensor 101. Preferably, the ultrasound cleaning unit 140 is controlled by the ECU 120.

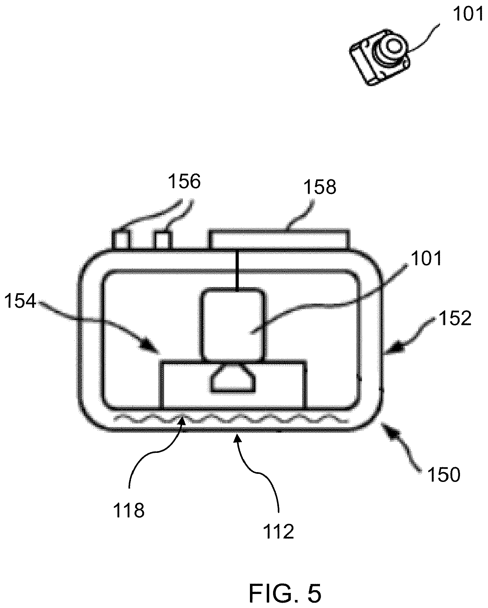

Fig. 5 shows a schematic diagram of a sensor 101 and a sensor housing 150 with an integrated heating element 118. Sensor 101 is an exemplary optical camera. However, other type of sensors such as radar sensors or lidar sensor can also be implemented. Fig.5 shows a variant of a straight-view single sensor housing 150. In other implementations, the sensor housing may receive more than one sensor for monitoring environmental conditions of a vehicle. The sensor housing 150 comprises a casing 152 and connectors 156 and 158 for connecting and controlling the heating element 118 and the sensor 101 respectively. The housing 150 also comprises an adapter 154 for holding or attaching the sensor 101 to the housing. The temperature of the surface to be cleaned 112 is controlled by the heating element 118 by means of control instructions provided, in particular via a CAN bus, to the heating element connector 156.

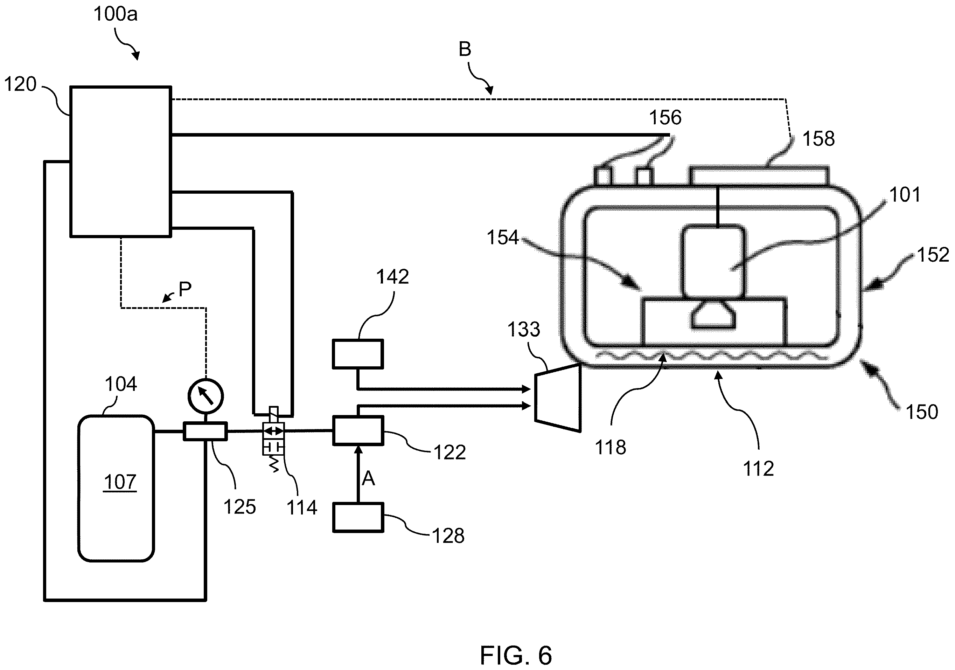

Fig. 6 shows schematic block diagram of a CO₂ sensor-cleaning arrangement 100a in accordance with another embodiment of the invention. The following discussion will focus on the differences between the arrangement 100 of Fig. 4 and the arrangement 100 of Fig. 6. Those technical features having the same or similar function will be referred to using the same reference numbers for the sake of simplicity. In the CO₂ sensor-cleaning arrangement 100a, a sensor 101 is integrated into a housing 150 as explained with reference to Fig. 5. A multi-function nozzle 133 is connected via a respective connection to a CO2 reservoir 104, to a compressed air supply 128 that delivers compressed air A and to a liquid reservoir. The ECU 120 is advantageously configured to independently control the operation of all supply unit 104, 128 and 142. An ionizer 122 is arranged an configured to ionize both the pressurized CO2 fluid 107 and the compressed air. Alternatively, a respective dedicated ionizer can be used to ionize the CO2 fluid 107 and the compressed air A. The ECU 120 receives the blockage detected signal B form the sensor. Alternatively, or additionally, the ECU 120 can be configured to determine, for example using image data or sensor data, whether the surface of the sensor 112 is blocked by contamination. The ECU also receives the pressure signal P from the pressure sensor 125. The ECU can also be configured to receive or provide signals or instructions from any other unit of the arrangement, such as the liquid reservoir, the ionizer, the heating element, the compressed air supply, or any other unit of the vehicle not shown, for instance for operating the arrangement of for determining whether the surface needs to be cleaned.

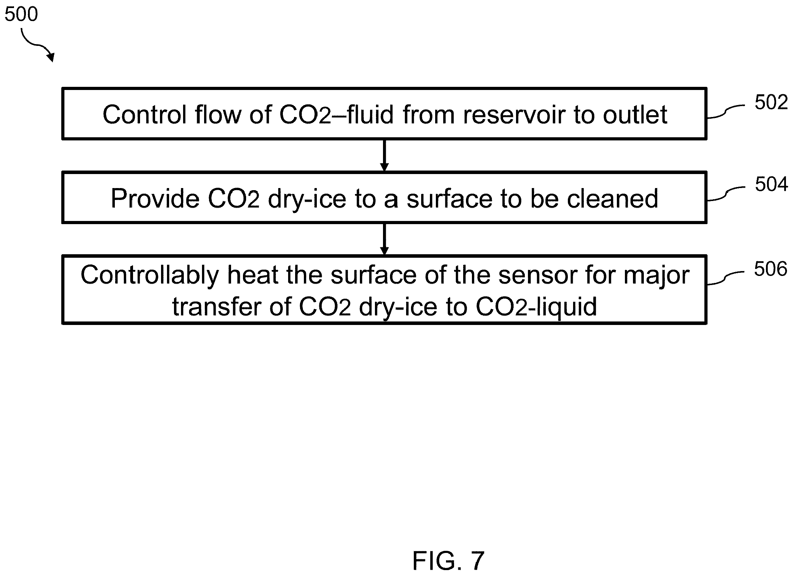

Fig. 7 a flow diagram of a method 500 for controlling operation of a CO₂ sensor-cleaning arrangement 100 in accordance with the invention. In particular a method 500 for controlling operation of a CO₂ sensor-cleaning arrangement 100 for cleaning a sensor 101, 103, 105, wherein the arrangement is adapted and the sensor 101, 103, 105 is adapted for being implemented in a vehicle 1000, in particular for supporting a sensing function for an advanced driver assistance system 1500 of the vehicle 1000. The method comprises, in a step 502, controlling a flow F of compressed CO₂ from a CO₂-reservoir 104 to an outlet 108 in a connection tube 106. The method also comprises, in a step 504, providing a CO₂-medium 110 to a surface 112 to be cleaned of the sensor 101, 103, 105, wherein the CO₂ medium is provided at least partly in the form of CO₂ dry-ice particles 110 from the CO₂-fluid. The method also comprises, in a step 506, controllably heating the surface 112 of the sensor 101.

In summary, the invention is directed to a CO₂ sensor-cleaning arrangement for cleaning a sensor, in particular for supporting a sensing function for an advanced driver assistance system. It comprises a CO₂ reservoir comprising pressurized CO₂, a connection tube connecting the CO₂ reservoir to a nozzle that is arranged and configured to provide CO₂ to a surface to be cleaned of the sensor, and a control valve arranged and configured to control a flow of CO₂. The nozzle has an orifice configured to generate CO₂ dry ice particles from the CO₂. It also comprises a heating element arranged and configured to controllably heat the surface of the sensor for preventing condensation on the surface of the sensor and for liquefying the dry ice particles provided by the nozzle.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

### List of reference signs (Part of the description)

- 100: CO₂ sensor-cleaning arrangement
- 100a: CO₂ sensor-cleaning arrangement
- 101: Sensor
- 103: Sensor
- 104: CO₂ reservoir
- 105: Sensor
- 106: Connection tube
- 107: CO₂ fluid (liquid or gas)
- 108: Outlet; Nozzle
- 110: CO₂ / snow
- 111: Liquefied CO₂ particles
- 112: Surface to be cleaned
- 114: Control valve / Solenoid valve
- 116: Orifice of outlet; orifice of nozzle
- 117: Second orifice
- 118: Heating element / Heater
- 118a: Heating plate
- 118b: Heating ring
- 120: Electronic control unit (ECU)
- 122: Ionizing unit / Ionizer
- 124: Blockage detection unit
- 125: Pressure sensor
- 126: Blockage / Contamination to be cleaned
- 126a: Removed contamination
- 127: Liquid / Water
- 128: Compressed air supply
- 130: Second connection tube
- 132: Second nozzle
- 133: Multi-function nozzle
- 134: Second control valve
- 140: Ultrasonic cleaning unit
- 142: Liquid reservoir
- 144: Ultrasound generator
- 150: Sensor housing
- 152: Casing
- 154: Adapter
- 156: Heating element connector
- 158: Sensor connector
- 500: Method
- 502: Method step
- 504: Method step
- 506: Method step
- A: Compressed air
- B: Blockage detected signal
- C1: Control signal for heating element
- C2: Control signal for control valve
- C3: Control signal for ionizer
- F: Flow of CO₂
- P: Pressure signal
- Pi: Pressure of dry ice particle
- V: Impact velocity

## Claims

1. CO₂ sensor-cleaning arrangement (100) for cleaning a sensor (101, 103, 105), wherein the arrangement is adapted and the sensor (101, 103, 105) is adapted for being implemented in a vehicle (1000), in particular for supporting a sensing function for an advanced driver assistance system (1500) of the vehicle (1000), and wherein the CO₂ the sensor -cleaning arrangement (100) comprises:
- a CO₂-reservoir (104) comprising pressurized CO₂-fluid (107), in particular as a pressurized CO₂-gas,
- a connection tube (106) connecting the CO₂-reservoir (104) to an outlet (108); and a control valve (114) arranged in the connection tube (106) and configured to control a flow (F) of the CO₂-fluid from the CO₂-reservoir (104) to the outlet (108);
- wherein the outlet (108) is arranged and configured to provide a CO₂-medium (110) to a surface (112) to be cleaned of the sensor (101, 103, 105);
**characterized in that**
- the outlet (108) has an orifice (116) configured to generate the CO₂-medium (110) at least partly in the form of CO₂ dry-ice particles (110) from the CO₂-fluid and
- the sensor cleaning arrangement (100) further comprises a heating element (118) arranged and configured to controllably heat the surface (112) of the sensor (101).

2. The CO₂ sensor-cleaning arrangement (100) of claim 1, wherein the surface (112) is heated such that liquefaction of the CO₂ dry-ice particles (110) provided by the outlet (108) is supported and condensate, in particular condensate of air, is prevented from remaining on the surface (112) of the sensor (101).

3. The CO₂ sensor-cleaning arrangement (100) of claim 1 or claim 2, further comprising an electronic control unit (120) arranged and configured for control operation of the control valve (114), in particular also the outlet (108) and/or for control operation of the heating element (118) to controllably heat the surface (112) of the sensor (101).

4. The CO₂ sensor-cleaning arrangement (100) of any of the preceding claims, wherein the heating element (118) is configured to set a temperature of the surface (112) of the sensor (101) at a temperature value between 40°C and 60°C.

5. The CO₂ sensor-cleaning arrangement (100) of any of the preceding claims, wherein the surface (112) of the sensor (101) is electrically grounded.

6. The CO₂ sensor-cleaning arrangement (100) of any of the preceding claims, further comprising a ionizer (122) arranged and configured to controllably ionize CO₂ molecules of the CO₂-medium (110), in particular to controllably ionize particles of the CO₂ dry-ice particles (110), in particular wherein an electronic control unit (120) is further configured to control operation of the ionizer (122).

7. The CO₂ sensor-cleaning arrangement of any of the preceding claims, further comprising a blockage detection unit (124), arranged and configured to monitor a state of the surface (112) of the sensor (101) and, upon detection of a blockage (126) on the surface of the sensor, to provide a blockage detected signal (B).

8. The CO₂ sensor-cleaning arrangement (100) of any of the preceding claims, wherein an electronic control unit (120) is further configured to receive the blockage detected signal (B) and to control operation of the control valve (114) in dependence thereof.

9. The CO₂ sensor-cleaning arrangement (100) of any of the preceding claims, further comprising:
- a compressed air supply (128) for supplying compressed air (129),
- a second connection tube (130) connecting the compressed air supply (128) to the nozzle (108) or to a second nozzle (132) that is arranged and configured to provide a jet of compressed air (129) to the surface (112) of the sensor (101, 103, 105) and
- a second control valve (134) arranged and configured to control a flow of compressed air (129) from the compressed air supply (128) to the nozzle (108) or to the second nozzle (132), in particular wherein the electronic control (120) unit is further configured to control operation of the second control valve (134).

10. The CO₂ sensor-cleaning arrangement (100) of any of the preceding claims, further comprising an ultrasonic cleaning unit (140) having a liquid reservoir (142) connected to the surface (112) of the sensor (101) and an ultrasound generator (144) configured to generate an ultrasound frequency for cleaning the surface (112) of the sensor (101), in particular wherein the electronic control unit is further configured to control operation of the ultrasonic cleaning unit (140).

11. The CO₂ sensor-cleaning arrangement of any of the preceding claims, wherein the sensor is an optical sensor, or a Lidar sensor or a radar sensor.

12. Commercial vehicle (1000) comprising a CO₂ sensor-cleaning arrangement (100) according to any of the preceding claim 1 to 11 for cleaning a sensor (101, 103, 105).

13. Commercial vehicle (1000) of claim 12, wherein the CO₂ sensor-cleaning arrangement (100) is configured to support a sensing function for an advanced driver assistance system (1500).

14. Method (500) for controlling operation of a CO₂ sensor-cleaning arrangement (100) for cleaning a sensor (101, 103, 105), wherein the arrangement is adapted and the sensor (101, 103, 105) is adapted for being implemented in a vehicle (1000), in particular for supporting a sensing function for an advanced driver assistance system (1500) of the vehicle (1000), the method comprising:
- controlling (502) a flow of compressed CO₂ from a CO₂-reservoir (104) to an outlet (108) in a connection tube (106)
- providing (504) a CO₂-medium (110) to a surface (112) to be cleaned of the sensor (101, 103, 105), wherein the CO₂ medium is provided at least partly in the form of CO₂ dry-ice particles (110) from the CO2-fluid; and
- controllably heating (506) the surface (112) of the sensor (101).

15. Computer program comprising instructions, which, when executed by a processor or an electronic control unit of a CO₂ sensor cleaning arrangement, cause the CO₂ sensor cleaning arrangement to carry out the method of claim 14.
